# EUROPEAN PATENT APPLICATION

(11) **EP 1 785 407 A1**
(43) Date of publication of application: **16.05.2007**
(21) Application number: 05765275.2
(22) Date of filing: 30.06.2005
(51) Int. Cl.: C04B 38/00, B01D 39/00, B01D 39/20, C03C 8/20

(54) **METHOD FOR PRODUCING CERAMIC POROUS ARTICLE**

(30) Priority: 13.07.2004 JP 2004205523
(71) Applicant: NGK INSULATORS, LTD., Nagoya-shi, Aichi 467-8530 (JP)
(72) Inventor: Takahashi, Tomonori, c/o NGK Insulators, Ltd., Nagoya-shi, Aichi 4678530 (JP); Mutoh, Kenji, c/o NGK Insulators, Ltd., Nagoya-shi, Aichi 4678530 (JP); Isomura, Manabu, c/o NGK Insulators, Ltd., Nagoya-shi, Aichi 4678530 (JP)
(74) Representative: TBK-Patent
(86) International application number: PCT/JP2005/012101
(87) International publication number: WO 2006/006422

(57) **Abstract**

There is provided a method for manufacturing a ceramic porous body comprising the steps of: mixing glass frit and silica particles with ceramic particles coming to function as framework particles to give a mixture, forming the mixture into a predetermined shape to obtain a formed body, drying the formed body, and firing the dried formed body. According to a method for manufacturing a ceramic porous body of the present invention, a ceramic porous body having excellent corrosion resistance against acid and alkali, and defects such as a strain and a crack are hardly caused during manufacturing.

## Description

### Technical Field

The present invention relates to a ceramic porous body used for a ceramic filter or the like for filtrating fluid such as liquid and gas.

### Background Art

There is used a ceramic filter for removing suspended matter, bacteria, dust, and the like in extensive fields of water treatment, exhaust gas treatment, medicine, foods, etc., because of its excellent physical strength, durability, corrosion resistance, and the like. There is used, in a ceramic filter, a ceramic porous body formed by bonding ceramic particles coming to function as a framework with a vitreous bonding material as its substrate material, filtration film, or an intermediate film for forming a filtration film.

In the case that such a ceramic porous body is used for, for example, a filtration filter for a water purification treatment, regular chemical washing is required in order to remove clogging. The washing is generally performed in such a manner that organic matter is removed by a sodium hypochlorite solution and that inorganic matter is removed by an acidic citric acid solution. That is, in the washing, a ceramic porous body is exposed to acid and alkali alternately. Therefore, a bonding material for a ceramic porous body is required to have corrosion resistance against both acid and alkali.

As an example of manufacturing a ceramic porous body where ceramic particles are bonded with a bonding material showing excellent corrosion resistance against acid and alkali for washing, there is disclosed a method where glass frit containing metal oxides such as Li₂O, Na₂O, K₂O, MgO, CaO, SrO, and BaO and silica sol are mixed with ceramic particles coming to function as framework particles, followed by firing (see Patent Document 1). In this method, SiO₂ component in the silica sol reacts with glass frit at temperature where glass frit is softened and puts a chemical composition of glass coming to function as a bonding material in a SiO₂ rich state. As a result, the ceramic porous body obtained shows excellent corrosion resistance.

However, since silica sol shrinks on a large scale in the case that silica sol is used in order to put a composition of glass of a bonding material in a SiO₂ rich state, the problem arises that defects such as a strain and a crack are prone to be caused.
Patent Document 1: JP-A-2003-238257

### Disclosure of the Invention

The present invention has been made in consideration of such conventional circumstances and aims to provide a method for manufacturing a ceramic porous body having excellent corrosion resistance against acid and alkali and hardly having defects such as a strain and a crack upon manufacturing.

According to the present invention, there is provided a method for manufacturing a ceramic porous body comprising the steps of:
mixing glass frit and silica particles with ceramic particles coming to function as framework particles to give a mixture,
forming the mixture into a predetermined shape to obtain a formed body,
drying the formed body, and
firing the dried formed body (first manufacturing method).

According to the present invention, there is further provided a method of manufacturing a ceramic porous body comprising the steps of:
mixing glass frit, silica particles, and silica sol with ceramic particles coming to function as framework particles to give a mixture,
forming the mixture into a predetermined shape to obtain a formed body,
drying the formed body, and
firing the dried formed body (second manufacturing method).

Incidentally, in the present invention, the word "silica particles" means silica particles having a particle diameter of 200 nm or more. In addition, in the present invention, the word "silica sol" means sol where silica fine particles having a particle diameter of 100 nm or less are dispersed in water.

According to a method for manufacturing a ceramic porous body of the present invention, a ceramic porous body having excellent corrosion resistance against acid and alkali can be manufactured, and defects such as a strain and a crack are hardly caused.

### Best Mode for Carrying out the Invention

As described above, in the first manufacturing method of the present invention, glass frit and silica particles are mixed with ceramic particles coming to function as framework particles to give a mixture, the mixture is formed into a predetermined shape to obtain a formed body, the formed body is dried, and the dried formed body is fired. In the second manufacturing method of the present invention, glass frit, silica particles, and silica sol are mixed with ceramic particles coming to function as framework particles to give a mixture, the mixture is formed into a predetermined shape to obtain a formed body, the formed body is dried, and the dried formed body is fired.

That is, in the present invention, a silica component-containing material is mixed besides glass frit in order to put a chemical composition of a bonding material for mutually bonding ceramic particles coming to function as framework particles in a SiO₂ rich state in the same manner as in the above prior art. However, the present invention employs silica particles having small firing shrinkage in place of or together with silica sol which has large firing shrinkage and tends to cause a strain or a crack as the silica component-containing material. Therefore, a ceramic porous body obtained by the present invention has a SiO₂ rich chemical composition of the bonding material and exhibits high corrosion resistance, and defects such as deformation or a crack due to firing shrinkage are hardly caused in the manufacturing process.

In the case of manufacturing a ceramic porous body where ceramic particles coming to function as framework particles are bonded with a vitreous bonding material, glass coming to function as the bonding material is soften in the process of firing a formed body to cross-link among ceramic particles to bond ceramic particles together. Therefore, in order to obtain high bonding strength, firing temperature sufficiently high for softening and deformation of glass is required. In the case that silica sol is used as a silica component-containing material as the prior art described above, silica of the silica sol has a small particle diameter of 100 nm or less, and therefore, silica particles aggregate and sinter before reacting with glass in a firing step to shrink on a large scale, which causes defects such as a strain and a crack. In contrast, in the case that silica particles are used as a silica component-containing material as in the present invention, there is little shrinkage even by heating at high temperature sufficient for softening of glass since silica particles have a large particle diameter.

Incidentally, while the first manufacturing method of the present invention employs only silica particles as the silica component-containing material, the second manufacturing method of the present invention employs silica particles and silica sol together as the silica component-containing material. This is because the second manufacturing method can take the following advantage obtained by the use of silica sol in addition to inhibit defects due to firing shrinkage as described above.

When silica sol is used as a silica component-containing material, a dried formed body (dried body) exhibits water resistance. For example, in the case that a ceramic porous body obtained in the present invention is used as an intermediate film to be disposed between a substrate of a ceramic filter and a filtration film, an intermediate film is formed on a surface of a porous substrate with a forming raw material (slurry for an intermediate film) containing silica sol, and the film is dried. The dried formed body (film) exhibits water resistance and does not deform easily even if it gets wet with water because of aggregation of fine particles. Therefore, when the film is used as an intermediate film, a filtration film can be formed by the use of slurry for a filtration film on a surface of the intermediate film without firing after drying. Thus, the number of firing in a manufacturing process of a ceramic filter can be reduced.

However, since such an effect in imparting water resistance by silica sol can be obtained by mixing only a small amount of silica sol, raw materials in the second manufacturing method are preferably mixed at a ratio of 10 to 40 parts by mass of glass frit, 5 to 20 parts by mass of silica particles, and 6 parts by mass or less of silica sol as SiO₂ with respect to 100 parts by mass of ceramic particles. On the other hand, raw materials in the first manufacturing method, where silica sol is not added, are preferably mixed at a ratio of 10 to 40 parts by mass of glass frit and 5 to 20 parts by mass of silica particles with respect to 100 parts by mass of ceramic particles.

When silica sol exceeds 6 parts by mass in the second manufacturing method, firing shrinkage increases to reduce an effect in suppressing defects such as a strain and a crack in accordance with firing shrinkage. In either of the first and the second manufacturing methods, when the glass frit content is less than 10 parts by mass, bonding force for bonding ceramic particles to one another is week, and when it exceeds 40 parts by mass, the number of pores is lowered to deteriorate permeability (air permeability) as a porous body. When the silica particle content is less than 5 parts by mass, an effect in improving corrosion resistance of the bonding material is hardly obtained; and when it exceeds 20 parts by mass, the number of pores is lowered to deteriorate permeability.

As a composition of glass frit used in the first manufacturing method, it is preferable that a resulting composition, in other words, the composition of a binder which binds ceramic particles finally, is a composition comprising 5 to 20 mol% of plural kinds of metal oxides containing at least two or more kinds of alkali metal oxides selected from Li₂O, Na₂O, and K₂O, and selected from a group consisting of Li₂O, Na₂O, K₂O, MgO, CaO, SrO and BaO, 3 mol% or more in total of ZrO₂ and/or TiO₂, and the rest of SiO₂ and inevitable impurities when SiO₂ contained in the silica particles is added to the glass frit.

As a composition of glass frit used in the second manufacturing method, it is preferable that a resulting composition, in other words, the composition of a binder which binds ceramic particles finally, is a composition comprising 5 to 20 mol% of plural kinds of metal oxides containing at least two or more kinds of alkali metal oxides selected from Li₂O, Na₂O, and K₂O, and selected from a group consisting of Li₂O, Na₂O, K₂O, MgO, CaO, SrO and BaO, 3 mol% or more in total of ZrO₂ and/or TiO₂, and the rest of SiO₂ and inevitable impurities when SiO₂ contained in the silica particles and the silica sol is added to the glass frit.

In any of the above compositions in the manufacturing methods, when the total content of the plural kinds of metal oxides is above 20 mol%, corrosion resistance is insufficient, and when it is below 5 mol%, a SiO₂ content is relatively too high, resulting in poor alkali resistance. When the total content of the above metal oxides is below 10 mol%, vitrification itself is difficult in a general glass-manufacturing method using a furnace having a melting temperature of about 1600°C. However, by mixing silica particles or silica particles and silica sol with glass frit having 10 mol% or more of the total content of the above metal oxides, glass having less than 10 mol% of the metal oxide content can finally be obtained.

In addition, though two or more kinds selected from Li₂O, Na₂O, and K₂O among the above plural metal oxides are particularly preferably contained, elution of the glass component in an acidic solution is suppressed by further adding an alkali earth metal oxide such as MgO, CaO, SrO, and BaO. Since particularly MgO and CaO are highly effective in improving corrosion resistance, it is preferable that at least one of these is contained.

With regard to the contents of the two or more kinds of alkali metal oxides among Li₂O, Na₂O, and K₂O contained in glass frit, the highest content is preferably lower than twice the lowest content (molar ratio). Particularly, when the contents of the alkali metal oxides are equal in molar ratio, elution of the glass component in an acidic solution is suppressed by a mixed alkali effect, and corrosion resistance is improved.

In the above compositions, at least one or both of ZrO₂ and TiO₂ is/are contained at a ratio of 3 mol% or more in total. By adding these components, the glass framework is reinforced, and elution of the glass component in an alkali solution is suppressed to improve corrosion resistance. Incidentally, the upper limitation is preferably about 12 mol% because too high content of these components results in excess deposition of crystal phases without vitrification.

In the first and second manufacturing methods of the present invention, examples of ceramic particles coming to function as framework particles include alumina particles, titania particles, mullite particles, spinel particles, zircon particles, silicon carbide particles, and silicon nitride particles. However, the ceramic particles are not limited to these, and the particle diameter can arbitrarily be selected depending on usage. For example, when a ceramic porous body obtained by the present invention is used as an intermediate film of a ceramic filter for a water purification treatment, alumina particles having a mean particle diameter of about 3 µm are suitably used.

In the present invention, a shape of a formed body and a forming method are not particularly limited. For example, when a ceramic porous body obtained by the present invention is used as an intermediate layer of a ceramic filter as described above, a film can be formed in layers on a surface of a porous substrate by a filtration film-forming method using slurry for an intermediate layer containing the above component. A formed body formed into a predetermined shape is dried and then fired at firing temperature where glass frit can be softened and deformed. In this firing step, it is preferable that ceramic particles are in a bonded state by a reactant of the glass frit and the silica particles in the first manufacturing method and by a reactant of the glass frit, the silica particles, and the silica sol in the second manufacturing method.

### Example

The present invention will hereinbelow be described in more detail on the basis of Examples. However, the present invention is by no means limited to these Examples.

There were prepared a slurry by mixing alumina particles coming to function as framework particles and having a mean particle diameter of 3 µm, glass frit a, b having a mean particle diameter of 0.8 µm and having a composition shown in Table 1, silica particles having a particle diameter of 200 to 300 nm, silica sol having a solid silica concentration of 30% and a particle diameter of 8 to 11 nm, and water at the ratio shown in Table 2. A dispersant and a filtration-resisting agent were further added to prepare slurry.

As a substrate for forming a ceramic film (a film of a ceramic porous body) thereon, there was prepared a porous alumina plate having a mean pore diameter of 10 µm, which was measured by mercury penetration method, an outer diameter of 30 mm, and a thickness of 3 mm. A ceramic film was formed on the alumina plate by a filtration film-forming method using the above slurry. Time for forming the filtration film was adjusted to give a thickness of 150 µm. After the film was dried, firing was conducted in an electric furnace in an ambient atmosphere at 950°C for one hour at a temperature rise rate of 100°C/hour. The obtained ceramic film was investigated to know if there was a crack or not and subjected to a corrosion resistance test. In addition, the composition of the bonding material bonding ceramic particles of the obtained ceramic film was obtained by a calculation from the composition of the glass frit and the mixed amounts of glass frit, silica particles, and silica sol.

The corrosion resistance test was performed by immersing the ceramic film by 6 hours alternately in an aqueous solution of 2% citric acid and an aqueous solution of 5000 ppm of available chlorine of sodium hypochlorine each having a temperature of 30°C, which was repeated 20 times, and then Vickers hardness was measured. As the measuring conditions of Vickers hardness, applied load was 100 gf, time for applying load was 10 seconds, and the average value measured at 10 points per one measurement was used. Incidentally, the initial hardness was 100 in any of the ceramic films. The test results are shown in Table 2.

**[Table 1]**

| | Glass frit a | Glass frit b |
|---|---|---|
| SiO₂ (mol%) | 68 | 77 |
| TiO₂ (mol%) | 2 | 0 |
| ZrO₂ (mol%) | 5 | 10 |
| Li₂O (mol%) | 7 | 4 |
| Na₂O (mol%) | 7 | 3 |
| K₂O (mol%) | 7 | 4 |
| MgO (mol%) | 2 | 1 |
| CaO (mol%) | 2 | 1 |

**[Table 2](a)**

| | | Example | Comp. Ex. | Example | Comp. Ex. | Example | Comp. Ex. |
|---|---|---|---|---|---|---|---|
| No. | | 1 | 1 | 2 | 2 | 3 | 3 |
| Amount of framework particles (parts by mass) | | 100 | 100 | 100 | 100 | 100 | 100 |
| Kind of glass frit | | a | a | a | a | a | a |
| Amount of glass frit (parts by mass) | | 11 | 11 | 20 | 20 | 40 | 40 |
| Amount of silica particles (parts by mass) | | 20 | 0 | 15 | 0 | 10 | 0 |
| Amount of silica sol (parts by mass) *1 | | 0 | 20 | 6 | 21 | 0 | 10 |
| Composition of bonding material on calculation (mol%) | SiO₂ | 88.5 | 88.5 | 84.0 | 84.0 | 73.2 | 73.2 |
| | TiO₂ | 1.0 | 1.0 | 1.4 | 1.4 | 2.4 | 2.4 |
| | ZrO₂ | 2.0 | 2.0 | 2.8 | 2.8 | 4.7 | 4.7 |
| | Li₂O | 2.4 | 2.4 | 3.3 | 3.3 | 5.5 | 5.5 |
| | Na₂O | 2.4 | 2.4 | 3.3 | 3.3 | 5.5 | 5.5 |
| | K₂O | 2.4 | 2.4 | 3.3 | 3.3 | 5.5 | 5.5 |
| | MgO | 0.7 | 0.7 | 0.9 | 0.9 | 1.6 | 1.6 |
| | CaO | 0.7 | 0.7 | 0.9 | 0.9 | 1.6 | 1.6 |
| Total of 5 kinds of metal oxides (mol%) *2 | | 8.5 | 8.5 | 11.7 | 11.7 | 19.7 | 19.7 |
| Total of TiO₂ and ZrO₂ (mol%) | | 3.0 | 3.0 | 4.2 | 4.2 | 7.1 | 7.1 |
| Crack | | None | Present | None | Present | None | Present |
| Hardness | | 70 | 40 | 60 | 40 | 60 | 50 |
| Evaluation | | ○ | × | ○ | × | ○ | × |

| | | | | | | | |
|---|---|---|---|---|---|---|---|
| *1: It is described as SiO₂ amount. *2: It is the total of Li₂O, Na₂O, K₂O, MgO, and CaO. | | | | | | | |

**[Table 2] (b)**

| | | Example | Comp. Ex. | Example | Comp. Ex. | Example | Comp. Ex. |
|---|---|---|---|---|---|---|---|
| No. | | 4 | 4 | 5 | 5 | 6 | 6 |
| Amount of framework particles (parts by mass) | | 100 | 100 | 100 | 100 | 100 | 100 |
| Kind of glass frit | | b | b | b | b | b | b |
| Amount of glass frit (parts by mass) | | 16 | 16 | 20 | 20 | 40 | 40 |
| Amount of silica particles (parts by mass) | | 15 | 0 | 15 | 0 | 10 | 0 |
| Amount of silica sol (parts by mass) *1 | | 6 | 21 | 4 | 19 | 0 | 10 |
| Composition of bonding material on calculation (mol%) | SiO₂ | 90.6 | 90.6 | 88.8 | 88.8 | 82.0 | 82.0 |
| | TiO₂ | 0.0 | 0.0 | 0.0 | 0.0 | 0.0 | 0.0 |
| | ZrO₂ | 4.1 | 4.1 | 4.9 | 4.9 | 7.8 | 7.8 |
| | Li₂O | 1.6 | 1.6 | 2.0 | 2.0 | 3.1 | 3.1 |
| | Na₂O | 1.2 | 1.2 | 1.5 | 1.5 | 2.4 | 2.4 |
| | K₂O | 1.6 | 1.6 | 2.0 | 2.0 | 3.1 | 3.1 |
| | MgO | 0.4 | 0.4 | 0.5 | 0.5 | 0.8 | 0.8 |
| | CaO | 0.4 | 0.4 | 0.5 | 0.5 | 0.8 | 0.8 |
| Total of 5 kinds of metal oxides (mol%) *2 | | 5.3 | 5.3 | 6.3 | 6.3 | 10.2 | 10.2 |
| Total of TiO₂ and ZrO₂ (mol%) | | 4.1 | 4.1 | 4.9 | 4.9 | 7.8 | 7.8 |
| Crack | | None | Present | None | Present | None | Present |
| Hardness | | 50 | 50 | 70 | 70 | 60 | 50 |
| Evaluation | | ○ | × | ○ | × | ○ | × |

| | | | | | | | |
|---|---|---|---|---|---|---|---|
| *1: It is described as SiO₂ amount. *2: It is the total of Li₂O, Na₂O, K₂O, MgO, and CaO. | | | | | | | |

As shown by the results in Table 2, each of Examples 1 to 6, where only silica particles or silica particles and silica sol were used as a silica component-containing material to put a glass composition of a bonding material for finally bonding framework particles in a SiO₂ rich state, showed corrosion resistance which is equal to or higher than that of Comparative Examples 1 to 6, where only silica sol was used, and no crack was caused though a crack was found in all the ceramic films of Comparative Examples.

### Industrial Applicability

The present invention can suitably be used as a method for manufacturing a ceramic porous body used for a filter for filtering fluid such as liquid and gas, or the like.

## Claims

1. A method for manufacturing a ceramic porous body comprising the steps of:
mixing glass frit and silica particles with ceramic particles coming to function as framework particles to give a mixture,
forming the mixture into a predetermined shape to obtain a formed body,
drying the formed body, and
firing the dried formed body.

2. A method for manufacturing a ceramic porous body according to Claim 1, wherein the ceramic particles are bonded by a reactant of the glass frit and the silica particles in the firing step.

3. A method for manufacturing a ceramic porous body according to Claim 1 or 2, wherein the formed body is formed in layers on a surface of a porous substrate.

4. A method for manufacturing a ceramic porous body according to any one of claims 1 to 3, wherein the ceramic particles are at least one kind of ceramic particles selected from a group consisting of alumina particles, titania particles, mullite particles, spinel particles, zircon particles, silicon carbide particles, and silicon nitride particles.

5. A method for manufacturing a ceramic porous body according to any one of Claims 1 to 4, wherein a resulting composition is a composition comprising
5 to 20 mol% of plural kinds of metal oxides containing at least two or more kinds of alkali metal oxides selected from Li₂O, Na₂O, and K₂O, and selected from a group consisting of Li₂O, Na₂O, K₂O, MgO, CaO, SrO and BaO,
3 mol% or more in total of ZrO₂ and/or TiO₂,
and the rest of SiO₂ and inevitable impurities when SiO₂ contained in the silica particles is added to the glass frit.

6. A method for manufacturing a ceramic porous body according to any one of Claims 1 to 5, wherein 10 to 40 parts by mass of the glass frit and 5 to 20 parts by mass of the silica particles are mixed with respect to 100 parts by mass of the ceramic particles.

7. A method of manufacturing a ceramic porous body according to any one of Claims 1 to 6, wherein the silica particles have a particle diameter of 200 nm or more.

8. A method of manufacturing a ceramic porous body comprising the steps of:
mixing glass frit, silica particles, and silica sol with ceramic particles coming to function as framework particles to give a mixture,
forming the mixture into a predetermined shape to obtain a formed body,
drying the formed body, and
firing the dried formed body.

9. A method for manufacturing a ceramic porous body according to Claim 8, wherein the ceramic particles are bonded by a reactant of the glass frit, the silica particles, and the silica sol in the firing step.

10. A method for manufacturing a ceramic porous body according to Claim 8 or 9, wherein the formed body is formed in layers on a surface of a porous substrate.

11. A method for manufacturing a ceramic porous body according to any one of claims 8 to 10, wherein the ceramic particles are at least one kind of ceramic particles selected from a group consisting of alumina particles, titania particles, mullite particles, spinel particles, zircon particles, silicon carbide particles, and silicon nitride particles.

12. A method for manufacturing a ceramic porous body according to any one of Claims 8 to 11, wherein a resulting composition is a composition comprising
5 to 20 mol% of plural kinds of metal oxides containing at least two or more kinds of alkali metal oxides selected from Li₂O, Na₂O, and K₂O, and selected from a group consisting of Li₂O, Na₂O, K₂O, MgO, CaO, SrO and BaO,
3 mol% or more in total of ZrO₂ and/or TiO₂,
and the rest of SiO₂ and inevitable impurities when SiO₂ contained in the silica particles and the silica sol is added to the glass frit.

13. A method for manufacturing a ceramic porous body according to any one of Claims 8 to 12, wherein 10 to 40 parts by mass of the glass frit, 5 to 20 parts by mass of the silica particles, and 6 parts by mass or less of the silica sol as SiO₂ are mixed with respect to 100 parts by mass of the ceramic particles.

14. A method of manufacturing a ceramic porous body according to any one of Claims 8 to 13, wherein the silica particles have a particle diameter of 200 nm or more.
